# EUROPEAN PATENT SPECIFICATION

(11) **EP 3 888 944 B1**
(45) Date of publication and mention of the grant of the patent: **24.01.2024**
(21) Application number: 19888920.6
(22) Date of filing: 18.06.2019
(51) Int. Cl.: B60C 11/03, B60C 11/12

(54) **PNEUMATIC TIRE**
LUFTREIFEN
PNEU

(30) Priority: 29.11.2018 JP 2018224000
(43) Date of publication of application: 06.10.2021
(73) Proprietor: The Yokohama Rubber Co., Ltd., Kanagawa Prefecture, 254-8601 (JP)
(72) Inventor: ISHIZAKA, Takahide, Hiratsuka-shi, Kanagawa 254-8601 (JP)
(74) Representative: Dilg, Haeusler, Schindelmann Patentanwaltsgesellschaft mbH
(86) International application number: PCT/JP2019/024072
(87) International publication number: WO 2020/110355

(56) References cited:
- WO-A1-2018/131229
- JP-A- 2012 228 920
- JP-A- 2017 197 036
- JP-A- 2018 103 674
- JP-A- 2018 114 846
- JP-A- 2018 135 064
- JP-A- 2018 140 745

## Description

### Technical Field

The present invention relates to a pneumatic tire.

### Background Art

In a pneumatic tire, a plurality of grooves are formed on the surface of a tread portion for the purpose of discharging water between the tread contact surface and the road surface when traveling on wet road surfaces. These grooves are also related to the wear characteristics of the tread portion. Accordingly, some pneumatic tires in the related art have improved wear characteristics by devising the groove arrangement configuration. For example, in the pneumatic tire described in Patent Document 1, by specifying the groove widths of the lateral grooves, the angles of the lateral grooves and the raised heights of the tie bars provided in the groove bottoms of the lateral grooves, and the land ratio between the center region and the middle region, drainage performance and wear resistance performance have improved in a well-balanced manner.

### Citation List

### Patent Literature

Patent Document 1: JP 2014-125109 A

WO 2018/131229 A1 discloses, in order to improve wet performance without degrading uneven wear resistance, this pneumatic tire is provided with: a pair of circumferential main grooves which are disposed on both sides of a tire equatorial plane CL in the tire width direction with the tire equatorial plane CL disposed therebetween, and which vibrate in the tire width direction while extending in the tire circumferential direction; a plurality of center lug grooves having both ends connected to the pair of circumferential main grooves; and center blocks defined by the center lug grooves and the pair of circumferential main grooves, wherein the center lug grooves each have two or more curved sections, and the center blocks each have a center micro-groove formed therein which has both ends connected to the pair of circumferential main grooves and has two or more curved sections.

### Summary of Invention

### Technical Problem

In view of the above, in recent years, there has been an increasing demand for reduction in rolling resistance of pneumatic tires during traveling of a vehicle. Approaches for reducing rolling resistance include, for example, an approach in which deformation of the land portion when the tread portion contacts the road surface is reduced by narrowing grooves formed in the tread portion. However, by narrowing the grooves, the drainage properties are reduced, and thus the traction characteristics when traveling on wet road surfaces are easily reduced. Accordingly, reducing rolling resistance without reducing traction characteristics has been very difficult.

The present invention has been made in view of the above, and an object of the present invention is to provide a pneumatic tire that is able to provide both reduction in rolling resistance and ensuring of traction characteristics in a compatible manner.

### Solution to Problem

In order to solve the problems and achieve the object described above, a pneumatic tire according to an embodiment of the present invention includes four or more circumferential main grooves extending in a tire circumferential direction, and a plurality of land portions defined by the circumferential main grooves, the land portions including a center land portion located on an innermost side in a tire width direction, a shoulder land portion located on an outermost side in the tire width direction, and a middle land portion located between the center land portion and the shoulder land portion, in at least one land portion of the center land portion and the middle land portion, a lug groove being disposed extending in the tire width direction and opening to two of the circumferential main grooves defining the land portion, a groove width LW of the lug groove being in a range 0.5 mm ≤ LW ≤ 3.0 mm, the lug groove including a lug groove central portion formed spaced apart from the circumferential main groove and having a predetermined length in an extension direction of the lug groove, and lug groove edge portions located on both sides of the lug groove central portion in the extension direction of the lug groove, and a groove depth Dc of the lug groove central portion, a groove depth De of the lug groove edge portion, and a groove depth Dg of the circumferential main groove having a relationship in a range 0.05 ≤ (Dc/Dg) ≤ 0.40 and in a range 0.60 ≤ (De/Dg) ≤ 1.00, and a width RWc of the lug groove central portion in the tire width direction and a width RWa of the land portion including the lug groove in the tire width direction having a relationship in a range 0.30 ≤ (RWc/RWa) ≤ 0.7.

In the pneumatic tire described above, preferably a width RWe of the lug groove edge portion in the tire width direction and the width RWa of the land portion including the lug groove in the tire width direction have a relationship in a range 0.10 ≤ (RWe/RWa) ≤ 0.30.

In the pneumatic tire described above, preferably the width RWa of the land portion including the lug groove in the tire width direction with respect to a tread development width TW is in a range 0.14 ≤ (RWa/TW) ≤ 0.20.

In the pneumatic tire described above, preferably, a sipe is disposed at a groove bottom of the lug groove central portion in the lug groove, and in the lug groove, a groove depth Dc of the lug groove central portion, a depth Ds of the sipe from the groove bottom of the lug groove central portion, and a groove depth Dg of the circumferential main groove have a relationship in a range 0.45 ≤ {(Dc + Ds)/Dg} ≤ 1.00.

In the pneumatic tire described above, preferably the lug groove includes two or more bent portions.

In the pneumatic tire described above, preferably the bent portion is located in the lug groove central portion, a bent portion notch portion is disposed on a reflex angle side of the bent portion in the lug groove, and in the bent portion notch portion, a depth Dn of the bent portion notch portion and a groove depth Dc of the lug groove central portion have a relationship in a range 0.50 ≤ (Dn/Dc) ≤ 1.00.

In the pneumatic tire described above, preferably the bent portion notch portion includes a contoured portion formed with a curved shape or a shape in which a curved shape and a straight line are connected.

In the pneumatic tire described above, preferably a shoulder lug groove extending in the tire width direction is disposed in the shoulder land portion, and, in the shoulder lug groove, a groove depth Dsh of the shoulder lug groove and a groove depth Dg of the circumferential main groove have a relationship in a range 0.05 ≤ (Dsh/Dg) ≤ 0.30.

In the pneumatic tire described above, preferably the shoulder lug groove includes a narrow shoulder lug groove and a wide shoulder lug groove, and the narrow shoulder lug groove and the wide shoulder lug groove are alternately disposed in the tire circumferential direction, a groove width LSHWn of the narrow shoulder lug groove is in a range 0.5 mm ≤ LSHWn ≤ 5.0 mm, a groove width LSHWw of the wide shoulder lug groove is in a range 5.0 mm ≤ LSHWw ≤ 8.0 mm, and the groove width LSHWn of the narrow shoulder lug groove and the groove width LSHWw of the wide shoulder lug groove have a relationship in a range 0.15 ≤ (LSHWn/LSHWw) ≤ 0.70.

In the pneumatic tire described above, preferably in the shoulder land portion, a shoulder notch portion is disposed opening to the circumferential main groove defining the shoulder land portion, a plurality of the shoulder notch portions being arranged in the tire circumferential direction and the shoulder lug groove opens to the shoulder notch portion and the narrow shoulder lug groove opens to the shoulder notch portion at a position on one end side of the shoulder notch portion in the tire circumferential direction.

In the pneumatic tire described above, preferably the shoulder lug groove is inclined in the tire circumferential direction with respect to the tire width direction, and in the shoulder lug groove located on one side of the tire equatorial plane in the tire width direction, a direction of inclination in the tire circumferential direction with respect to the tire width direction from the tire equatorial plane side in the tire width direction toward an outer side in the tire width direction is in an identical direction with the shoulder lug groove located on an other side of the tire equatorial plane in the tire width direction.

In the pneumatic tire described above, preferably in the land portion, a main groove edge notch portion is disposed opening to the circumferential main groove, a plurality of the main groove edge notch portions being arranged in the tire circumferential direction.

In the pneumatic tire described above, preferably an opening portion of the lug groove to the circumferential main groove opens at a position opposite to, among opposing groove walls of the circumferential main groove, a groove wall that is opposite to a groove wall on a side where the lug groove opens.

### Advantageous Effects of Invention

The pneumatic tire according to an embodiment of the present invention has the effect of being able to provide reduction in rolling resistance and ensuring of traction characteristics in a compatible manner.

### Brief Description of Drawings

FIG. 1 is a meridian cross-sectional view illustrating a main portion of a pneumatic tire according to an embodiment.
FIG. 2 is a view taken along line A-A of FIG. 1 in the direction of the arrows.
FIG. 3 is a detailed view of portion B of FIG. 2.
FIG. 4 is a schematic diagram of a lug groove illustrated in cross-section C1-C2-C3-C4 in FIG. 3.
FIG. 5 is a detailed view of a portion F of FIG. 2.
FIG. 6 is a cross-sectional view taken along a line G-G in FIG. 5.
FIG. 7 is a cross-sectional view taken along a line H-H in FIG. 5.
FIG. 8A is a table showing results of performance evaluation tests of pneumatic tires.
FIG. 8B is a table showing results of performance evaluation tests of pneumatic tires.

### Description of Embodiments

Pneumatic tires according to embodiments of the present invention are described in detail below with reference to the drawings. However, the present invention is not limited by the embodiment but only by the appended claims. Constituents of the following embodiments include elements that are essentially identical or that can be substituted or easily conceived by a person skilled in the art within the scope of the claims.

### [Embodiments]

In the following description, the tire radial direction refers to a direction orthogonal to the rotation axis (not illustrated) of a pneumatic tire 1, the inner side in the tire radial direction refers to the side facing the rotation axis in the tire radial direction, and the outer side in the tire radial direction refers to the side away from the rotation axis in the tire radial direction. Moreover, the tire circumferential direction refers to the circumferential direction with the rotation axis as the central axis. Additionally, the tire width direction refers to a direction parallel with the rotation axis, the inner side in the tire width direction refers to a side toward the tire equatorial plane (tire equator line) CL in the tire width direction, and the outer side in the tire width direction refers to a side away from the tire equatorial plane CL in the tire width direction. The tire equatorial plane CL is a plane that is orthogonal to the rotation axis of the pneumatic tire 1 and passes through the center of the tire width of the pneumatic tire 1, and in the tire equatorial plane CL, the center line in the tire width direction, which is the center position of the pneumatic tire 1 in the tire width direction, coincides with the position in the tire width direction. "Tire width" is the width in the tire width direction between portions located on the outermost side in the tire width direction, or in other words, the distance between the portions that are the most distant from the tire equatorial plane CL in the tire width direction. "Tire equator line" refers to the line in the tire circumferential direction of the pneumatic tire 1 that lies on the tire equatorial plane CL.

Moreover, the pneumatic tire 1 according to the present embodiment is a pneumatic tire 1 in which the rotation direction when mounted on a vehicle is designated, or in other words, the pneumatic tire 1 is mounted on a vehicle so as to rotate in a designated rotation direction around a rotation axis when the vehicle moves forward. The pneumatic tire 1 also has a rotation direction indicator portion (not illustrated) that indicates the rotation direction. The rotation direction indicator portion, for example, is constituted by a mark or recesses/protrusions provided on the sidewall portion 5 of the tire. In the following description, the leading side in the tire rotation direction is the rotation direction side when the pneumatic tire 1 is rotated in the designated direction, in the case where the pneumatic tire 1 is mounted on a vehicle and is rotated in a designated direction when traveling, this is the side that first comes into contact with the road surface or moves away from the road surface first. In addition, the trailing side in the tire rotation direction is the opposite side to the rotation direction when the pneumatic tire 1 is rotated in the designated direction, and in a case where the pneumatic tire 1 is mounted on a vehicle and is rotated in a designated direction when traveling, this is the side that comes in contact with the road surface after the portion that is located on the leading side, or that separates from the road surface after the portion that is located on the leading side.

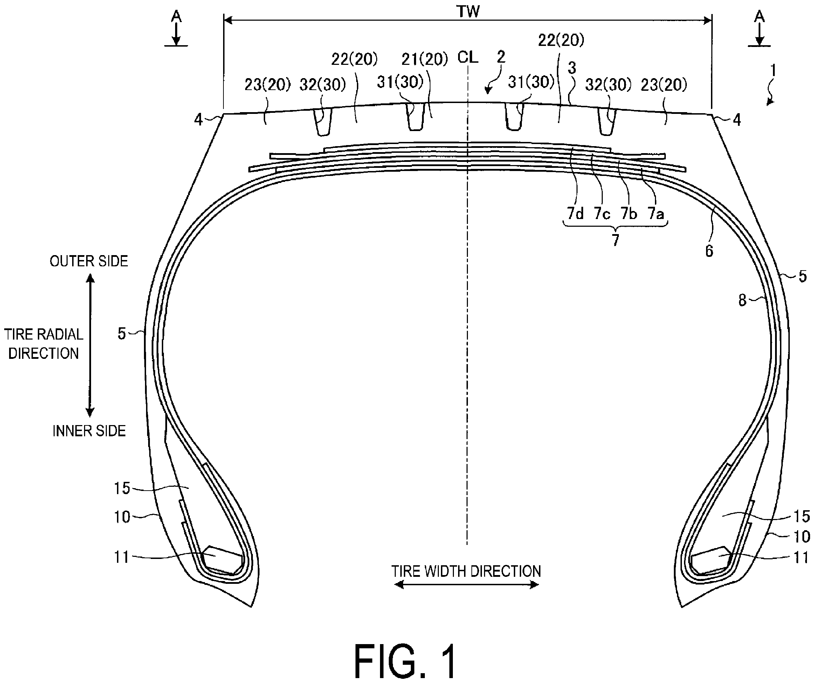

FIG. 1 is a meridian cross-sectional view illustrating a main portion of the pneumatic tire 1 according to the embodiment. The pneumatic tire 1 according to the present embodiment, as viewed in a tire meridian cross-section, is provided with a tread portion 2 on the outermost side in the tire radial direction. The surface of the tread portion 2, i.e., the portion that comes into contact with the road surface while a vehicle (not illustrated) to which the pneumatic tires 1 are mounted travels, is formed as a tread contact surface 3. Four circumferential main grooves 30 extending in the tire circumferential direction are formed in the tread contact surface 3. The four circumferential main grooves 30 are disposed side by side in the tire width direction. Additionally, a plurality of land portions 20 are defined by the circumferential main grooves 30, which are disposed side by side in the tire width direction, in the tread contact surface 3.

Both ends of the tread portion 2 in the tire width direction are formed as shoulder portions 4. Sidewall portions 5 are disposed from the shoulder portions 4 to predetermined positions on the inner side in tire radial direction. In other words, the sidewall portions 5 are disposed at two positions on both sides of the pneumatic tire 1 in the tire width direction.

Furthermore, a bead portion 10 is disposed on the inner side of each sidewall portion 5 in the tire radial direction. The bead portions 10 are disposed at two positions on both sides of the tire equatorial plane CL similarly to the sidewall portions 5. In other words, a pair of the bead portions 10 are disposed on both sides of the tire equatorial plane CL in the tire width direction. Bead cores 11 are disposed in the pair of respective bead portions 10, and a bead filler 15 is disposed on an outer side of each bead core 11 in the tire radial direction. The bead core 11 is formed by winding a bead wire, which is a steel wire, into a ring shape. The bead filler 15 is a rubber material disposed in a space formed by an end portion in the tire width direction of a carcass 6 described later being folded back on the outer side in the tire width direction at the position of the bead core 11.

A belt layer 7 is disposed on the inner side of the tread portion 2 in the tire radial direction. The belt layer 7 has a multilayer structure in which, for example, four layers of belts 7a, 7b, 7c, and 7d are layered and is formed by coating a plurality of belt cords made of a steel or an organic fiber material, such as polyester, rayon, or nylon, with a coating rubber and performing a rolling process on it. Furthermore, the belts 7a, 7b, 7c, and 7d have mutually different belt angles defined as inclination angles of the belt cords in the tire width direction with respect to the tire circumferential direction, and the belts 7a, 7b, 7c, and 7d are layered so that the inclination directions of the belt cords intersect with one another, i.e., a crossply structure.

The carcass 6 that includes a code of a radial ply is provided in a continuous manner on the inner side of the belt layer 7 in the tire radial direction and on the tire equatorial plane CL side of the sidewall portion 5. The carcass 6 has a single layer structure made of one carcass ply or a multilayer structure made of a plurality of layered carcass plies, and extends between the bead cores 11 disposed on both sides in the tire width direction in a toroidal shape, forming the backbone of the tire. Specifically, the carcass 6 is disposed from one bead portion 10 to the other bead portion 10 in the pair of bead portions 10 located on both sides in the tire width direction, and turned back on the outer side in the tire width direction along the bead cores 11 in the bead portions 10, wrapping around the bead cores 11 and the bead fillers 15. The carcass ply of the carcass 6 disposed in this manner is formed using steel cords, which are carcass cords made of a steel material, by performing a rolling process on a plurality of coating rubber-covered steel cords. In other words, the carcass 6 is configured using a steel carcass material.

Additionally, an innerliner 8 is formed along the carcass 6 on the inner side of the carcass 6 or on the inner side of the carcass 6 in the pneumatic tire 1.

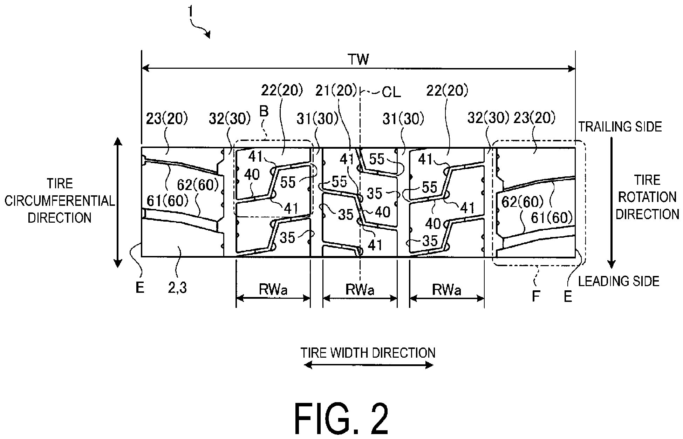

FIG. 2 is a view taken along line A-A of FIG. 1 in the direction of the arrows. The four circumferential main grooves 30 formed in the tread contact surface 3 include a pair of inner circumferential main grooves 31 extending in the tire circumferential direction disposed on both sides of the tire equatorial plane CL in the tire width direction with the tire equatorial plane CL interposed therebetween, and a pair of outer circumferential main grooves 32 extending in the tire circumferential direction disposed on an outer side of each of the pair of inner circumferential main grooves 31 in the tire width direction. In other words, in the inner circumferential main grooves 31, two inner circumferential main grooves 31 are disposed on both sides of the tire equatorial plane CL in the tire width direction, and, in the outer circumferential main grooves 32, two outer circumferential main grooves 32 are disposed on both sides of the two inner circumferential main grooves 31 in the tire width direction with the two inner circumferential main grooves 31 interposed therebetween in the tire width direction. The circumferential main grooves 30 have a groove width in the range of from not less than 5 mm to not greater than 15 mm and a groove depth in the range of from not less than 13 mm to not greater than 20 mm.

The land portions 20 defined by the circumferential main grooves 30 include a center land portion 21 located on an innermost side in the tire width direction, a shoulder land portion 23 located on an outermost side in the tire width direction, and a middle land portion 22 located between the center land portion 21 and the shoulder land portion 23. Of these, the center land portion 21 is a land portion 20 located between the pair of the inner circumferential main grooves 31 and defined on both sides in the tire width direction by the pair of the inner circumferential main grooves 31. In this way, the center land portion 21 is located on the tire equatorial plane CL. Additionally, in the middle land portion 22, both side portions in the tire width direction are land portions 20 defined by the adjacent inner circumferential main groove 31 and the outer circumferential main groove 32. Additionally, the shoulder land portion 23 is located on the outer side of the outer circumferential main groove 32 in the tire width direction, and the inner portion in the tire width direction is a land portion 20 defined by the outer circumferential main groove 32. The center land portion 21, the middle land portion 22, and the shoulder land portion 23 are provided with one center land portion 21, two middle land portions 22, and two shoulder land portions 23 arranged side by side in tire circumferential direction.

Of these land portions 20, the center land portion 21 and the middle land portion 22 include a lug groove 40 disposed therein. The lug groove 40 extends in the tire width direction and opens to two circumferential main grooves 30 defining the land portion 20 where the lug groove 40 is disposed. In other words, in the lug groove 40 disposed in the center land portion 21, one end is open to an inner circumferential main groove 31 which is one of the two inner circumferential main grooves 31 defining the center land portion 21, and the other end is open to the other inner circumferential main groove 31. Additionally, the lug groove 40 disposed in the middle land portion 22 defined by the inner circumferential main groove 31 and the outer circumferential main groove 32 open at one end to the inner circumferential main groove 31 and the other end to the outer circumferential main groove 32.

A width RWa of the land portion 20 having the lug groove 40 in the tire width direction with respect to a tread development width TW is in a range 0.14 ≤ (RWa/TW) ≤ 0.20. In other words, in both of the center land portion 21 and the middle land portion 22 each of which is the land portion 20 having the lug groove 40, the width RWa in the tire width direction with respect to the tread development width TW is in a range 0.14 ≤ (RWa/TW) ≤ 0.20. The tread development width TW refers to a linear distance in the tire width direction between the end portions on the outer side in tire width direction of the tread contact surface 3 in the two shoulder land portions 23 located on both sides in the tire width direction when the pneumatic tire 1 is mounted on a regular rim, inflated to a regular internal pressure, and in an unloaded state. Here, "regular rim" refers to a standard rim defined by the Japan Automobile Tyre Manufacturers Association Inc. (JATMA), a "design rim" defined by the Tire and Rim Association, Inc. (TRA), or a "measuring rim" defined by the European Tyre and Rim Technical Organisation (ETRTO). Moreover, a regular internal pressure refers to a "maximum air pressure" defined by JATMA, the maximum value in "TIRE LOAD LIMITS AT VARIOUS COLD INFLATION PRESSURES" defined by TRA, or "INFLATION PRESSURES" defined by ETRTO.

The lug groove 40 disposed in the center land portion 21 or the middle land portion 22 has two bent portions 41. In the two bent portions 41 formed in one lug groove 40, directions of bending are mutually opposite along the lug grooves 40 from one circumferential main groove 30 side toward the other circumferential main groove 30 side, and, in this way, the lug grooves 40 are formed in a crank-like shape. In addition, the lug groove 40 disposed in the center land portion 21 and the lug groove 40 disposed in the middle land portion 22 have different orientations of bending of the bent portions 41. In other words, the lug grooves 40 each disposed in the two middle land portions 22 have a same orientation of the crank-like shape of the lug groove 40 formed by the two bent portions 41, whereas the lug groove 40 disposed in the center land portion 21 has an orientation of the crank-like shape opposite to the orientation of the crank-like shape of the lug groove 40 disposed in the middle land portion 22. In other words, the lug groove 40 disposed in the center land portion 21 and the lug groove 40 disposed in the middle land portion 22 are shaped symmetrically in the tire width direction.

An opening portion 55 of the lug groove 40 to the circumferential main groove 30 is open at a position opposing to, among opposing groove walls 35 of the circumferential main groove 30, a groove wall 35 that is opposite to a groove wall 35 on a side where the lug groove 40 opens. In other words, in the lug grooves 40, positions of the opening portions 55 of the lug grooves 40 in the tire circumferential direction that open to different groove walls 35 of the identical circumferential main groove 30 differ from each other. Specifically, the plurality of lug grooves 40 that open to different groove walls 35 of the identical circumferential main groove 30 open alternately in the tire circumferential direction to the circumferential main groove 30. For example, the lug grooves 40 of the center land portion 21 and the lug grooves 40 of the middle land portion 22 that open to the identical inner circumferential main groove 31 open alternately in the tire circumferential direction to the inner circumferential main groove 31.

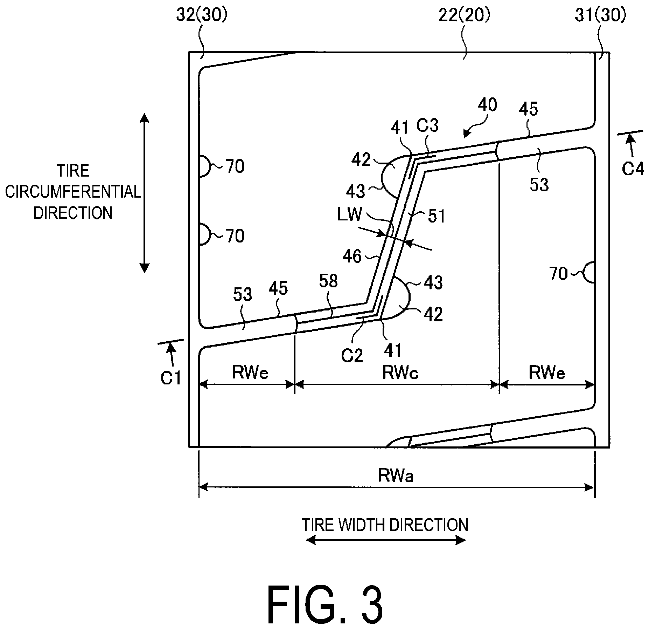

FIG. 3 is a detailed view of portion B of FIG. 2. The lug groove 40 disposed in the center land portion 21 and the lug groove 40 disposed in the middle land portion 22 are shaped symmetrically, and thus a lug groove 40 disposed in the middle land portion 22 is used as an example for explaining the lug groove 40 in detail. The lug groove 40 includes, by bending at two bent portions 41, a width direction extending portion 45 extending in the tire width direction and a circumferential direction extending portion 46 extending in the tire circumferential direction. In this case, the width direction extending portion 45 refers to a portion of the lug grooves 40 formed with an inclination angle greater than 45° in the tire width direction with respect to the tire circumferential direction, and the circumferential direction extending portion 46 refers to a portion of the lug grooves 40 formed with an inclination angle not greater than 45° in the tire width direction with respect to the tire circumferential direction.

Note that the width direction extending portion 45 has an inclination angle preferably not less than 60° and not greater than 90° in the tire width direction with respect to the tire circumferential direction, and the circumferential direction extending portion 46 has an inclination angle preferably not less than 0° and not greater than 25° in the tire width direction with respect to the tire circumferential direction. In addition, a groove width LW of the lug groove 40 is in a range 0.5 mm ≤ LW ≤ 3.0 mm. The groove width LW of the lug groove 40 is preferably in a range 0.5 mm ≤ LW ≤ 3.0 mm.

Furthermore, a bent portion notch portion 42 is disposed on a reflex angle side of the bent portion 41 in the lug groove 40. Specifically, the bent portion notch portion 42 is disposed on the reflex angle side of the bent portion 41 of the lug groove 40 either on the side along the circumferential direction extending portion 46, or on the side extending from the width direction extending portion 45. The bent portion notch portion 42 is formed in a shape that is recessed from the tread contact surface 3, and a contoured portion 43 is formed in a curved shape. In other words, the bent portion notch portion 42 is formed in a shape in which the contoured portion 43 has a substantially arc shape that protrudes in an extension direction of the width direction extending portion 45. The bent portion notch portion 42 is disposed in a similar form on each of the two bent portions 41.

Additionally, the lug groove 40 has a lug groove central portion 51 and a lug groove edge portion 53. Of these, the lug groove central portion 51 is a portion of the lug groove 40 formed spaced from the circumferential main groove 30 and having a predetermined length in the extension direction of the lug groove 40, and the lug groove edge portions 53 are located on both sides of the lug groove central portion 51 in the extension direction of the lug groove 40.

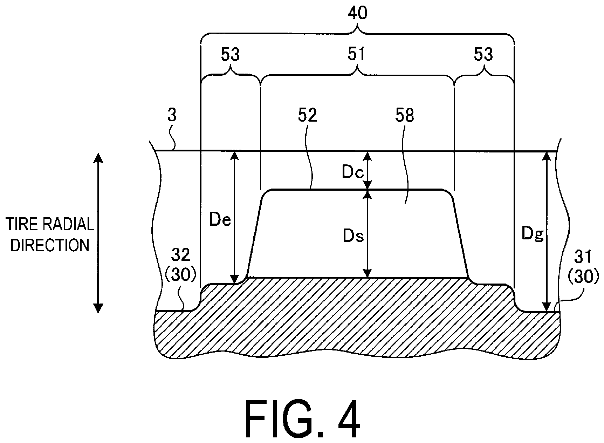

FIG. 4 is a schematic diagram of a lug groove 40 illustrated in cross-section C1-C2-C3-C4 in FIG. 3. The lug groove central portion 51 and the lug groove edge portions 53 of the lug groove 40 have different groove depths, and a groove depth Dc of the lug groove central portion 51 is less than a groove depth De of the lug groove edge portion 53. In other words, the lug groove central portion 51 is formed as a raised bottom portion having a groove depth less than that of the lug groove edge portion 53. Specifically, in the lug groove 40, the groove depth Dc of the lug groove central portion 51 and a groove depth Dg of the circumferential main groove 30 have a relationship in a range 0.05 ≤ (Dc/Dg) ≤ 0.40, and the groove depth De of the lug groove edge portion 53 and the groove depth Dg of the circumferential main groove 30 have a relationship in a range 0.60 ≤ (De/Dg) ≤ 1.00. Note that the groove depth Dc of the lug groove central portion 51 is preferably in a range 0.05 ≤ (Dc/Dg) ≤ 0.30.

Additionally, a sipe 58 is disposed at the groove bottom 52 of the lug groove central portion 51 in the lug groove 40. The sipe 58 is disposed at or near the center of the groove bottom 52 of the lug groove central portion 51 in the groove width direction of the lug groove 40, and is disposed across both ends of the lug groove central portion 51 in the extension direction of the lug groove 40. In other words, the sipe 58 is disposed in the lug groove central portion 51 across the lug groove edge portions 53 located on both sides of the lug groove central portion 51 in the extension direction of the lug groove 40.

The sipe 58 described herein is formed in a narrow groove shape, the groove width of which is narrower than the groove width LW of the lug groove 40 and refers to such narrow grooves that when the pneumatic tire 1 is mounted on a regular rim and is inflated to a regular internal pressure, although wall surfaces constituting the sipe 58 do not contact each other in a no-load state, if the land portion 20 where the sipe 58 is disposed is located in a portion of a ground contact surface formed on a flat plate when a load is applied to the flat plate in a vertical direction or if the land portion 20 where the sipe 58 is disposed collapses, wall surfaces constituting the sipe 58 or at least parts of portions formed on the wall surface contact each other due to deformation of the land portion 20.

In the lug grooves 40 in which the sipe 58 is disposed in the lug groove central portion 51, the groove depth Dc of the lug groove central portion 51, the depth Ds of the sipe 58 from the groove bottom 52 of the lug groove central portion 51, and the groove depth Dg of the circumferential main groove 30 have a relationship in a range 0.45 ≤ (Dc + Ds)/Dg} ≤ 1.00. In addition, the sipe 58 has a sipe depth in the range of from 0.5 mm to 1.0 mm.

Additionally, a width RWc (see FIG. 3) of the lug groove central portion 51 included in the lug groove 40 in the tire width direction and a width RWa (see FIG. 3) of the land portion 20 having the lug groove 40 in the tire width direction have a relationship in a range 0.30 ≤ (RWc/RWa) ≤ 0.7. On the other hand, a width RWe (see FIG. 3) of the lug groove edge portion 53 in the tire width direction and the width RWa of the land portion 20 having the lug groove 40 in the tire width direction have a relationship in a range 0.10 ≤ (RWe/RWa) ≤ 0.30.

In addition, the lug groove central portion 51 is disposed from one width direction extending portion 45 of the two width direction extending portions 45 to the other width direction extending portion 45 of the lug grooves 40 as well as throughout the circumferential direction extending portion 46 located between the width direction extending portions 45. Thus, the two bent portions 41 of the lug groove 40 are both located in the lug groove central portion 51. As described above, in the bent portion notch portion 42 disposed in the bent portion 41 located in the lug groove central portion 51, the depth Dn (not illustrated) of the bent portion notch portion 42 and the groove depth Dc of the lug groove central portion have a relationship in a range 0.50 ≤ (Dn/Dc) ≤ 1.00.

Of the plurality of land portions 20 defined by the circumferential main grooves 30, in the shoulder land portion 23, a shoulder lug groove 60 (see FIG. 2) extending in the tire width direction is disposed. An end portion of the shoulder lug groove 60 on an inner side in the tire width direction opens to the outer circumferential main groove 32 that defines the shoulder land portion 23, and the end portion on the outer side in the tire width direction opens to the design end E. As used herein, a design end E refers to the outermost edge of the tread portion 2 in the tire width direction, and is the outermost end in the tire width direction where the grooves are formed in the tread portion 2.

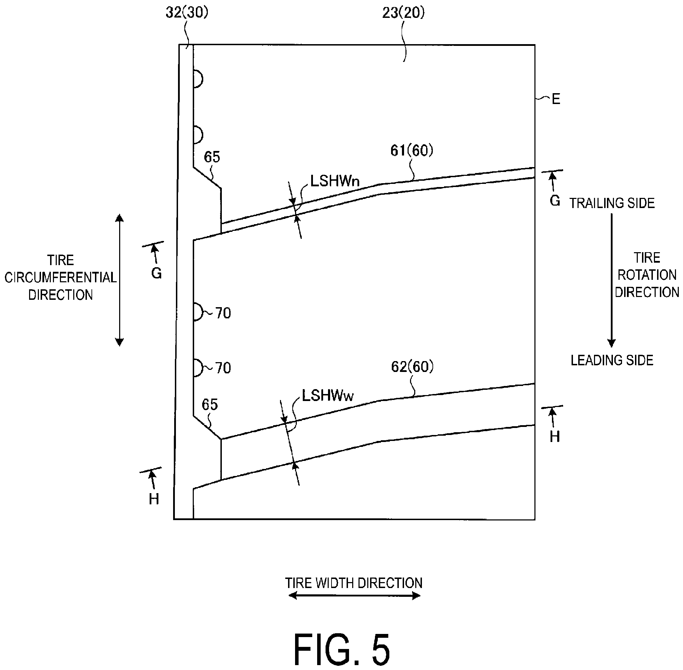

FIG. 5 is a detailed view of a portion F of FIG. 2. The shoulder lug grooves 60 disposed in the shoulder land portion 23 have two types of shoulder lug grooves 60 with different groove widths, a narrow shoulder lug groove 61 having a relatively narrower groove width, and a wide shoulder lug groove 62 having a wider groove width than the narrow shoulder lug groove 61. The narrow shoulder lug groove 61 and the wide shoulder lug groove 62 are disposed alternately in the tire circumferential direction.

In the groove widths of the shoulder lug grooves 60, a groove width LSHWn of the narrow shoulder lug groove 61 is in a range 0.5 mm ≤ LSHWn ≤ 5.0 mm. Additionally, a groove width LSHWw of the wide shoulder lug groove 62 is in a range 5.0 mm ≤ LSHWw ≤ 8.0 mm. Furthermore, the groove width LSHWn of the narrow shoulder lug groove 61 and the groove width LSHWw of the wide shoulder lug groove 62 have a relationship in a range 0.15 ≤ (LSHWn/LSHWw) ≤ 0.70.

Furthermore, a shoulder notch portion 65 is disposed in the shoulder land portion 23. A shoulder notch portion 65 opens to the outer circumferential main groove 32 defining the shoulder land portion 23, a plurality of the shoulder notch portions 65 being arranged in the tire circumferential direction. The shoulder notch portion 65 is formed in a substantially trapezoidal shape in which an opening portion to the outer circumferential main groove 32 and an end portion on a side terminating in the shoulder land portion 23 are parallel in a plan view of the tread contact surface 3. Specifically, the shoulder notch portion 65 is formed in a substantially trapezoidal shape in which the width of the opening portion to the outer circumferential main groove 32 in the tire circumferential direction is greater than the width of an end portion on a side terminating in the shoulder land portion 23 in the tire circumferential direction.

The plurality of the shoulder notch portions 65 are disposed at positions in the tire circumferential direction that are identical to the positions of a plurality of shoulder lug grooves 60 in the tire circumferential direction, and the shoulder lug groove 60 opens to the end portion of the shoulder notch portion 65 on the side terminating in the shoulder land portion 23. In other words, the shoulder lug groove 60 opens to the outer circumferential main groove 32 via the shoulder notch portion 65 that opens to the outer circumferential main groove 32.

The width of the end portion of the shoulder notch portion 65 on the side where the shoulder lug grooves 60 open is substantially equal to the groove width LSHWw of the wide shoulder lug groove 62. Thus, the groove width LSHWn of the narrow shoulder lug groove 61 is narrower than the width of the end portion of the shoulder notch portion 65 on the side where the narrow shoulder lug groove 61 opens. The narrow shoulder lug groove 61, which is narrower than the width of the shoulder notch portion 65, is open to the shoulder notch portion 65 at a position on one end side of the shoulder notch portion 65 in the tire circumferential direction.

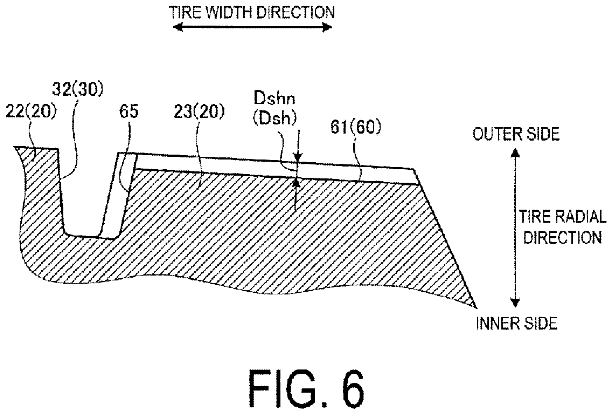

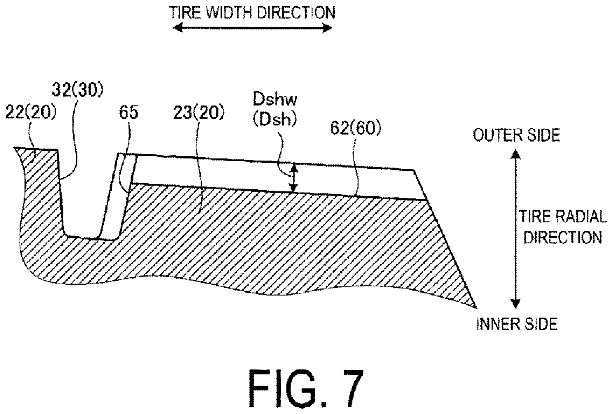

FIG. 6 is a cross-sectional view taken along a line G-G in FIG. 5. FIG. 7 is a cross-sectional view taken along a line H-H in FIG. 5. In the shoulder lug groove 60, the groove depth Dsh of the shoulder lug groove 60 and the groove depth Dg of the circumferential main groove have a relationship in a range 0.05 ≤ (Dsh/Dg) ≤ 0.30. Also, the groove depths Dsh of the shoulder lug grooves 60 differ between the narrow shoulder lug groove 61 and the wide shoulder lug groove 62, and the narrow shoulder lug groove 61 has a groove depth Dsh that is less than that of the wide shoulder lug groove 62. Specifically, in the narrow shoulder lug groove 61, the groove depth Dshn of the narrow shoulder lug groove 61 and the groove depth Dg of the circumferential main groove have a relationship in a range 0.05 ≤ (Dshn/Dg) ≤ 0.15. Specifically, in the wide shoulder lug groove 62, the groove depth Dshw of the wide shoulder lug groove 62 and the groove depth Dg of the circumferential main groove have a relationship in a range 0.15 ≤ (Dshw/Dg) ≤ 0.30.

Additionally, the shoulder lug groove 60 is inclined in the tire circumferential direction with respect to the tire width direction, and the inclination direction of the shoulder lug groove 60 in the tire circumferential direction with respect to the tire width direction is substantially axisymmetric with respect to the tire equatorial plane CL. That is, in the shoulder lug groove 60 located on one side of the tire equatorial plane CL in the tire width direction, a direction of inclination in the tire circumferential direction with respect to the tire width direction from the tire equatorial plane CL side toward an outer side in the tire width direction is in the same direction with the shoulder lug groove 60 located on the other side of the tire equatorial plane CL in the tire width direction. The inclination direction of the shoulder lug groove 60, specifically, any of the shoulder lug grooves 60 located on both sides of the tire width direction, is inclined in the tire circumferential direction with respect to the tire width direction in a direction from the leading side toward the trailing side in the tire rotation direction, from the tire equatorial plane CL side toward the outer side in the tire width direction.

Furthermore, in the land portion 20, a main groove edge notch portion 70 (see FIGS. 3 and 5) is formed that is a notch formed having a size in the tire width direction smaller than that of, for example, the groove width of the lug groove 40 and opening to the circumferential main groove 30. A plurality of the main groove edge notch portions 70 are formed side by side in the tire circumferential direction in a portion of each land portion 20 defined by the circumferential main grooves 30. In the present embodiment, in the main groove edge notch portions 70 formed in a portion defined by the inner circumferential main groove 31 in the center land portion 21 and the middle land portion 22, one is formed between each of the adjacent lug grooves 40 arranged in the tire circumferential direction. Additionally, in the main groove edge notch portions 70 formed in a portion defined by the outer circumferential main groove 32 in the middle land portion 22, two are formed between each of the adjacent lug grooves 40 arranged in the tire circumferential direction. Additionally, in the main groove edge notch portions 70 formed in a portion of the shoulder land portion 23 defined by the outer circumferential main groove 32, two are also formed between each of the adjacent shoulder lug grooves 60 arranged in the tire circumferential direction.

An application of the pneumatic tire 1 according to the present embodiment is a heavy duty pneumatic tire. When the pneumatic tire 1 is mounted on a vehicle, the pneumatic tire 1 is mounted on a vehicle on a rim wheel and inflated. The pneumatic tire 1 mounted on the rim wheel is mounted on a large vehicle such as a truck or bus, for example.

When the vehicle on which the pneumatic tires 1 are mounted is driven, the pneumatic tire 1 rotates while the tread contact surface 3 located at the bottom in the tread contact surface 3 comes into contact with the road surface. When the vehicle on which the pneumatic tires 1 are mounted travels on a dry road surface, the vehicle travels mainly by transmitting a driving force and a braking force to the road surface and generating a turning force by friction forces between the tread contact surfaces 3 and the road surface. Additionally, during traveling on wet road surfaces, water between the tread contact surface 3 and the road surface enters, for example, the circumferential main grooves 30 and the lug grooves 40, and the vehicle travels while draining the water between the tread contact surface 3 and the road surface by the grooves. As a result, the tread contact surface 3 easily contacts the road surface, and the vehicle can travel by the friction force between the tread contact surface 3 and the road surface.

In view of the above, such grooves are also involved in the rigidity of the land portion 20, and in the case in which the size of the land portion 20 decreases due to the arrangement configuration of the grooves, the rigidity of the land portion 20 is decreased. When the rigidity of the land portion 20 decreases, energy is consumed in the deformation of the land portion 20 when the pneumatic tire 1 is rolling, and thus rolling resistance increases. On the other hand, in the case in which the groove width is reduced in order to ensure the rigidity of the land portion 20, drainage properties are reduced, and thus traction characteristics when traveling on wet road surfaces are easily reduced.

In contrast, in the pneumatic tire 1 according to the present embodiment, a groove width LW of the lug grooves 40 is in a range 0.5 mm ≤ LW ≤ 3.0 mm, and thus traction characteristics when traveling on wet road surfaces can be ensured while suppressing increases in rolling resistance. In other words, because the groove width LW of the lug grooves 40 is less than or equal to 3.0 mm, the rigidity of the land portion 20 on which the lug grooves 40 are disposed can be prevented from becoming too low, and deformation of the land portion 20 when the pneumatic tire 1 is rolling can be suppressed, and thus rolling resistance can be prevented from becoming excessively large. Additionally, the groove width LW of the lug grooves 40 is not less than 0.5 mm, and thus drainage properties when ensuring the rigidity of the land portion 20 can be ensured, and traction characteristics on wet road surfaces can be ensured. In this way, traction characteristics when traveling on wet road surfaces can be ensured while suppressing increases in rolling resistance.

Additionally, the lug groove 40 has a lug groove central portion 51 and a lug groove edge portion 53, and, in the lug groove central portion 51, a groove depth Dc of the lug groove central portion 51 and a groove depth Dg of the circumferential main groove 30 have a relationship in a range 0.05 ≤ (Dc/Dg) ≤ 0.40, and thus traction characteristics on wet road surfaces can be ensured while suppressing increases in rolling resistance more reliably. In other words, in the lug groove 40, the groove depth Dc of the lug groove central portion 51 with respect to the groove depth Dg of the circumferential main grooves 30 is (Dc/Dg) ≤ 0.40, and thus the lug groove central portion 51 can more reliably suppress the rigidity of the land portion 20 in which the lug grooves 40 are disposed becoming too low. Accordingly, the rolling resistance becoming too large can be suppressed even more reliably. Also, in the lug groove 40, the groove depth Dc of the lug groove central portion 51 with respect to the groove depth Dg of the circumferential main groove 30 is (Dc/Dg) ≥ 0.05, and thus when providing the lug groove central portion 51 for ensuring the rigidity of the land portion 20, drainage properties can be ensured. In this way, traction characteristics on wet road surfaces can be ensured. Accordingly, traction characteristics on wet road surfaces can be ensured while suppressing increases in rolling resistance more reliably.

Additionally, in the lug groove 40, the groove depth De of the lug groove edge portion 53 and the groove depth Dg of the circumferential main groove 30 have a relationship in a range 0.60 ≤ (De/Dg) ≤ 1.00, and thus traction characteristics on wet road surfaces can be ensured while more reliably suppressing increases in rolling resistance. In other words, in the lug groove 40, the groove depth De of the lug groove edge portion 53 with respect to the groove depth Dg of the circumferential main groove 30 is (De/Dg) ≤ 1.00, and thus the groove depth De of the lug groove edge portion 53 becoming too deep can be suppressed, and the rigidity of the land portion 20 in which the lug grooves 40 are disposed becoming too low can be suppressed more reliably. Accordingly, the rolling resistance becoming too large can be suppressed even more reliably. Also, in the lug groove 40, the groove depth De of the lug groove edge portion 53 with respect to the groove depth Dg of the circumferential main groove 30 is (De/Dg) ≥ 0.60, and thus by the lug groove edge portion 53, the drainage properties in the lug groove 40 can be ensured. In this way, traction characteristics on wet road surfaces can be ensured. Accordingly, traction characteristics on wet road surfaces can be ensured while suppressing increases in rolling resistance more reliably.

Additionally, in the lug grooves 40, the width RWc of the lug groove central portion 51 in the tire width direction and the width RWa of the land portion 20 in the tire width direction have a relationship in a range 0.30 ≤ (RWc/RWa) ≤ 0.7, and thus traction characteristics on wet road surfaces can be ensured while suppressing increases in rolling resistance more reliably. In other words, in the lug groove 40, the width RWc of the lug groove central portion 51 in the tire width direction with respect to the width RWa of the land portion 20 is (RWc/RWa) ≥ 0.30, and thus the lug groove central portion 51 having a shallower groove depth Dc can be disposed in a wide range of the land portion 20, and the lug groove central portion 51 can more reliably suppress the rigidity of the land portion 20 in which the lug grooves 40 are disposed becoming too low. Accordingly, the rolling resistance becoming too large can be suppressed even more reliably. Additionally, in the lug groove 40, the width RWc of the lug groove central portion 51 in the tire width direction with respect to the width RWa of the land portion 20 is (RWc/RWa) ≤ 0.7, and thus the range in which the lug groove central portion 51 having shallow groove depths Dc is disposed becoming too wide can be suppressed, and drainage properties can be ensured when ensuring the rigidity of the land portion 20 by providing the lug groove central portion 51. In this way, traction characteristics on wet road surfaces can be ensured. Accordingly, traction characteristics on wet road surfaces can be ensured while suppressing increases in rolling resistance more reliably. As a result, both reduction in rolling resistance and ensuring of traction characteristics can be provided in a compatible manner.

Additionally, in the lug groove 40, the width RWe of the lug groove edge portion 53 in the tire width direction and the width RWa of the land portion 20 in the tire width direction have a relationship in a range 0.10 ≤ (RWe/RWa) ≤ 0.30, and thus rolling resistance can be effectively reduced. In other words, in the case in which the width RWe of the lug groove edge portion 53 with respect to the width RWa of the land portion 20 is (RWe/RWa) < 0.10 or (RWe/RWa) > 0.30, the position of the lug groove central portion 51 with respect to the land portion 20 may be biased too far in either direction in the tire width direction. In this case, the rigidity of the land portion 20 ensured by the lug groove central portion 51 may be biased in the tire width direction, and ensuring the rigidity of the land portion 20 in a well-balanced manner becomes difficult, and thus the rolling resistance may be less likely to be effectively reduced.

In contrast, in the case in which the width RWe of the lug groove edge portion 53 with respect to the land portion 20 width RWa is in a range 0.10 ≤ (RWe/RWa) ≤ 0.30, the position of the lug groove central portion 51 with respect to the land portion 20 being biased too far in the tire width direction can be suppressed. In this way, biasing of the rigidity of the land portion 20 in the tire width direction can be suppressed, and by ensuring the rigidity of the land portion 20 in a well-balanced manner, rolling resistance can be effectively reduced. As a result, the rolling resistance may be reduced more reliably.

Additionally, the width RWa of the land portion 20 having the lug groove 40 in the tire width direction with respect to the tread development width TW is in a range 0.14 ≤ (RWa/TW) ≤ 0.20, and thus the rigidity of the land portion 20 can be ensured without reducing drainage properties when traveling on wet road surfaces more reliably. In other words, in the case in which the width RWa of the land portion 20 having the lug groove 40 in the tire width direction with respect to the tread development width TW is (RWa/TW) < 0.14, the width RWa of the land portion 20 is too small, and thus ensuring the rigidity of the land portion 20 is difficult, and effective reduction of rolling resistance may be difficult. Additionally, in the case in which the width RWa of the land portion 20 having the lug grooves 40 in the tire width direction with respect to the tread development width TW is (RWa/TW) > 0.20, the width RWa of the land portion 20 is too large with respect to the tread development width TW, and thus ensuring drainage properties when traveling on wet road surfaces may be difficult. In this case, effectively ensuring traction characteristics on wet road surfaces may be difficult.

In contrast, in the case in which the width RWa of the land portion 20 having the lug groove 40 in the tire width direction with respect to the tread development width TW is in a range 0.14 ≤ (RWa/TW) ≤ 0.20, the rigidity of the land portion 20 can be ensured without reducing drainage properties when traveling on wet road surfaces more reliably. As a result, both reduction in rolling resistance and ensuring of traction characteristics can be provided more reliably in a compatible manner.

Additionally, in the lug groove 40, a sipe 58 is disposed at the groove bottom 52 of the lug groove central portion 51, and thus drainage properties of the lug groove 40 when the lug groove central portion 51 is provided can be ensured by the sipe 58 while reducing the rigidity of the land portions 20 as much as possible and traction characteristics on wet road surfaces can be ensured. As a result, both reduction in rolling resistance and ensuring of traction characteristics can be provided more reliably in a compatible manner.

Additionally, in the lug groove 40, the groove depth Dc of the lug groove central portion 51, the depth Ds of the sipe 58 from the groove bottom 52 of the lug groove central portion 51, and the groove depth Dg of the circumferential main groove 30 have a relationship in a range 0.45 ≤ (Dc + Ds)/Dg} ≤ 1.00, and thus the drainage properties of the lug grooves 40 can be more reliably improved by the sipe 58 while suppressing the rigidity of the land portion 20 becoming too low. In other words, in the case in which the groove depth Dc of the lug groove central portion 51, the depth Ds of the sipe 58, and the groove depth Dg of the circumferential main groove 30 have a relationship {(Dc + Ds)/Dg} < 0.45, the combined depth of the groove depth Dc of the lug groove central portion 51 and the depth Ds of the sipe 58 is too shallow, and thus, even if the sipe 58 is disposed, the drainage properties of the lug groove 40 may be less likely to be effectively ensured by the sipe 58. Additionally, in the case in which the groove depth Dc of the lug groove central portion 51, the depth Ds of the sipe 58, and the groove depth Dg of the circumferential main groove 30 have a relationship {(Dc + Ds)/Dg} > 1.00, the combined depth of the groove depth Dc of the lug groove central portion 51 and the depth Ds of the sipe 58 is too deep, and thus, by disposing the sipe 58, the rigidity of the land portion 20 may be easily reduced. In this case, effectively reducing rolling resistance may be difficult.

In contrast, in the case in which the groove depth Dc of the lug groove central portion 51, the depth Ds of the sipe 58, and the groove depth Dg of the circumferential main groove 30 have a relationship in a range 0.45 ≤ (Dc + Ds)/Dg} ≤ 1.00, the drainage properties of the lug groove 40 can be more reliably improved by the sipe 58 while suppressing the rigidity of the land portion 20 becoming too low. As a result, both reduction in rolling resistance and ensuring of traction characteristics can be provided more reliably in a compatible manner.

Additionally, the lug groove 40 has two bent portions 41, and thus the edge components of the lug groove 40 can be increased, and the edge components can be acted on in a plurality of directions. In this way, the edge effect of the lug groove 40 can be increased. As a result, traction characteristics on wet road surfaces can be improved more reliably.

In addition, the bent portion notch portion 42 is disposed on the reflex angle side of the bent portion 41 in the lug groove 40, and thus strain at or near the bent portion 41 when the land portion 20 deforms when the pneumatic tire 1 is rolling can be reduced, and stress concentration on the bent portion 41 can be suppressed. In this way, occurrence of cracking originating from the bent portion 41 can be suppressed when the bent portions 41 are provided in the lug groove 40.

Additionally, the bent portion 41 is located in the lug groove central portion 51, and in the bent portion notch portion 42 disposed in the bent portion 41, the depth Dn of the bent portion notch portion 42 and the groove depth Dc of the lug groove central portion 51 have a relationship in a range 0.50 ≤ (Dn/Dc) ≤ 1.00, and thus reduction in rolling resistance and cracking resistance can be provided in a compatible manner. In other words, in the case in which the depth Dn of the bent portion notch portion 42 and the groove depth Dc of the lug groove central portion 51 have a relationship (Dn/Dc) < 0.50, the depth Dn of the bent portion notch portion 42 is too shallow, and thus, even if the bent portion notch portion 42 is disposed in the bent portion 41, stress concentration on the bent portion 41 may be less likely to be effectively suppressed. In addition, in the case in which the depth Dn of the bent portion notch portion 42 and the groove depth Dc of the lug groove central portion 51 have a relationship (Dn/Dc) > 1.00, the depth Dn of the bent portion notch portion 42 is too shallow, and thus the rigidity of the land portion 20 may be more likely to decrease due to the bent portion notch portion 42. In this case, effectively reducing rolling resistance may be difficult.

In contrast, in the case in which the depth Dn of the bent portion notch portion 42 and the groove depth Dc of the lug groove central portion 51 have a relationship in a range 0.50 ≤ (Dn/Dc) ≤ 1.00, a decrease in the rigidity of the land portion 20 is suppressed, and the occurrence of cracking can be more reliably suppressed while suppressing stress concentration on the bent portion 41. As a result, both reduction in rolling resistance and cracking resistance can be provided in a compatible manner.

In addition, in the bent portion notch portion 42 disposed in the bent portion 41 of the lug groove 40, the contoured portion 43 is formed with a curved shape, and thus the stress concentration on the bent portion 41 when the land portion 20 is deformed can be suppressed more reliably by the bent portion notch portion 42. As a result, cracking can be more reliably suppressed and cracking resistance can be improved more reliably.

Additionally, in the shoulder lug groove 60 disposed in the shoulder land portion 23, a groove depth Dsh of the shoulder lug groove 60 and the groove depth Dg of the circumferential main groove 30 have a relationship in a range 0.05 ≤ (Dsh/Dg) ≤ 0.30, and thus reduction in noise and traction characteristics when the pneumatic tire 1 is rolling can be provided in a compatible manner. That is, by disposing the shoulder lug groove 60 in the shoulder land portion 23, traction characteristics on wet road surfaces can be further increased due to the drainage properties of the shoulder lug groove 60, however, in the case in which the groove depth Dsh of the shoulder lug groove 60 and the groove depth Dg of the circumferential main groove 30 have a relationship (Dsh/Dg) < 0.05, the groove depth Dsh of the shoulder lug groove 60 is too shallow, and thus ensuring the drainage properties of the shoulder lug groove 60 may be difficult. In this case, even if the shoulder lug groove 60 is disposed in the shoulder land portion 23, effectively increasing traction characteristics on wet road surfaces may be difficult. Additionally, in the case in which the groove depth Dsh of the shoulder lug groove 60 and the groove depth Dg of the circumferential main groove 30 have a relationship (Dsh/Dg) > 0.30, the groove depth Dsh of the shoulder lug groove 60 is too deep, and thus the noise performance may be easily degraded. In other words, when the shoulder lug groove 60 is disposed in the shoulder land portion 23, a hitting sound when the tread contact surface 3 contacts the ground when the pneumatic tire 1 is rolling becomes noise and spreads to the surroundings by passing through the shoulder lug grooves 60 toward the outer side in the tire width direction, and in the case in which (Dsh/Dg) > 0.30, the groove depth Dsh of the shoulder lug grooves 60 is too deep, and thus the sound passing through the shoulder lug groove 60 to an outer side in the tire width direction may be too large. In this case, noise performance can be negatively affected because the amount of sound that exits from the ground contact region of the pneumatic tire 1 toward the outer side in the tire width direction is increased.

In contrast, in the case in which the groove depth Dsh of the shoulder lug groove 60 and the groove depth Dg of the circumferential main groove 30 have a relationship in a range 0.05 ≤ (Dsh/Dg) ≤ 0.30, drainage properties of the shoulder lug groove 60 can be ensured while suppressing the amount of sound that exits from the ground contact region of the pneumatic tire 1 to the outer side in the tire width direction through the shoulder lug grooves 60. As a result, noise performance and traction characteristics can be provided in a compatible manner.

Additionally, in the shoulder lug groove 60, the narrow shoulder lug groove 61 and the wide shoulder lug groove 62 having different groove widths are alternately disposed in the tire circumferential direction, and thus noise performance and traction characteristics can be provided more reliably. In other words, by disposing the narrow shoulder lug groove 61 having a narrow groove width, the amount of sound that exits from the ground contact region of the pneumatic tire 1 through the shoulder lug grooves 60 to the outer side in the tire width direction can be more reliably suppressed, and the deterioration in noise performance can be more reliably suppressed. Additionally, by disposing the wide shoulder lug groove 62 having a wide groove width, drainage properties of the shoulder lug groove 60 can be more reliably ensured, and traction characteristics can be more reliably improved.

Additionally, a groove width LSHWn of the narrow shoulder lug groove 61 is in a range 0.5 mm ≤ LSHWn ≤ 5.0 mm, and a groove width LSHWw of the wide shoulder lug groove 62 is in a range 5.0 mm ≤ LSHWw ≤ 8.0 mm, and thus drainage properties of the shoulder lug groove 60 can be ensured while suppressing the amount of sound that exits from the ground contact region of the pneumatic tire 1 to the outer side in the tire width direction through the shoulder lug groove 60 more reliably. In other words, in the case in which the groove width LSHWn of the narrow shoulder lug groove 61 is LSHWn < 0.5 mm or the groove width LSHWw of the wide shoulder lug groove 62 is LSHWw < 5.0 mm, the groove width LSHWn of the narrow shoulder lug groove 61 or the groove width LSHWw of the wide shoulder lug groove 62 are too narrow, and thus ensuring the drainage properties of the shoulder lug groove 60 may be difficult. Additionally, in the case in which the groove width LSHWn of the narrow shoulder lug groove 61 is LSHWn > 5.0 mm or the groove width LSHWw of the wide shoulder lug groove 62 is LSHWw > 8.0 mm, the groove width LSHWn of the narrow shoulder lug groove 61 or the groove width LSHWw of the wide shoulder lug groove 62 are too wide, and thus the sound passing through the shoulder lug grooves 60 to the outer side in the tire width direction may be too large.

In contrast, in the case in which the groove width LSHWn of the narrow shoulder lug groove 61 is in a range 0.5 mm ≤ LSHWn ≤ 5.0 mm, and the groove width LSHWw of the wide shoulder lug groove 62 is in a range 5.0 mm ≤ LSHWw ≤ 8.0 mm, drainage properties of the shoulder lug groove 60 can be ensured while suppressing the amount of sound that exits from the ground contact region of the pneumatic tire 1 to the outer side in the tire width direction through the shoulder lug grooves 60 more reliably.

Furthermore, in the shoulder lug groove 60, the groove width LSHWn of the narrow shoulder lug groove 61 and the groove width LSHWw of the wide shoulder lug groove 62 have a relationship in a range 0.15 ≤ (LSHWn/LSHWw) ≤ 0.70, and thus drainage properties of the shoulder lug grooves 60 can be ensured while suppressing the amount of sound that exits from the ground contact region of the pneumatic tire 1 to the outer side in the tire width direction through the shoulder lug grooves 60 more reliably. In other words, in the case in which the groove width LSHWn of the narrow shoulder lug groove 61 and the groove width LSHWw of the wide shoulder lug groove 62 have a relationship (LSHWn/LSHWw) < 0.15, ensuring drainage properties in the narrow shoulder lug groove 61 may be difficult due to the groove width LSHWn of the narrow shoulder lug groove 61 being too narrow, or the sound passing through the wide shoulder lug groove 62 to the outer side in the tire width direction may be too large due to the groove width LSHWw of the wide shoulder lug grooves 62 being too wide. In this case, providing both noise performance and traction characteristics may be difficult. Additionally, in the case in which the groove width LSHWn of the narrow shoulder lug groove 61 and the groove width LSHWw of the wide shoulder lug groove 62 have a relationship (LSHWn/LSHWw) > 0.70, the sound passing through the narrow shoulder lug grooves 61 to the outer side in the tire width direction may be too large due to the groove width LSHWn of the narrow shoulder lug groove 61 being too wide, or ensuring drainage properties in the wide shoulder lug groove 62 may be difficult due to the groove width LSHWw of the wide shoulder lug groove 62 being too narrow. In this case, providing both noise performance and traction characteristics may be difficult.

In contrast, in the case in which the groove width LSHWn of the narrow shoulder lug groove 61 and the groove width LSHWw of the wide shoulder lug groove 62 have a relationship in a range 0.15 ≤ (LSHWn/LSHWw) ≤ 0.70, when viewing the narrow shoulder lug grooves 61 and the wide shoulder lug grooves 62 together, drainage properties of the shoulder lug groove 60 can be ensured while suppressing the amount of sound that exits from the ground contact region of the pneumatic tire 1 to the outer side in the tire width direction through the shoulder lug grooves 60 more reliably. As a result, noise performance and traction characteristics can be provided more reliably in a compatible manner.

Additionally, the shoulder lug groove 60 opens to the shoulder notch portion 65 that is disposed in the shoulder land portion 23 and opens to the circumferential main groove 30, and thus ground contact pressure of the shoulder land portion 23 can be prevented from being too high at or near the portions where the shoulder lug groove 60 opens to the circumferential main groove 30. In this way, separation and uneven wear of the land portion 20 due to the large difference in ground contact pressure can be suppressed.

Additionally, the narrow shoulder lug groove 61 opens to the shoulder notch portion 65 at a position on one end side of the shoulder notch portion 65 in the tire circumferential direction, and thus the occurrence of cracking or separation originating at or near the portion where the narrow shoulder lug groove 61 opens to the shoulder notch portion 65 can be suppressed. In other words, the groove width LSHWn of the narrow shoulder lug groove 61 is narrower than the width of the shoulder notch portion 65 in the tire circumferential direction, and thus in the case in which the narrow shoulder lug groove 61 opens at a position at or near the center of the shoulder notch portion 65 in the tire circumferential direction, a step between the narrow shoulder lug groove 61 and the shoulder notch portion 65 is formed on both sides of the narrow shoulder lug groove 61 in the tire circumferential direction. In such steps, stress concentration is likely to occur and cracking and separation of the land portions 20 is prone to occur due to stress concentration, and thus fewer steps are preferable.

In the present embodiment, the narrow shoulder lug groove 61 opens to the shoulder notch portion 65 at a position on the one end side of the shoulder notch portion 65 in the tire circumferential direction, and thus the step between the narrow shoulder lug groove 61 and the shoulder notch portion 65 is only one side of the narrow shoulder lug groove 61 in the tire circumferential direction. In this way, the number of steps from which cracking and separation originate can be reduced, and thus the occurrence of cracking and separation can be suppressed. As a result, cracking resistance, separation resistance, and uneven wear resistance may be more reliably improved.

Additionally, in the shoulder lug groove 60 located on one side of the tire equatorial plane CL in the tire width direction, a direction of inclination in the tire circumferential direction with respect to the tire width direction from the tire equatorial plane CL side in the tire width direction toward an outer side in the tire width direction is in the same direction with the shoulder lug groove 60 located on the other side of the tire equatorial plane CL in the tire width direction, and thus the direction of the sound emitted from the shoulder lug grooves 60 to the outer side in the tire width direction when the pneumatic tire 1 is rolling can be aligned. In this way, the sound emitted from the shoulder lug grooves 60 emits sound in a direction that is not prone to be noise, and noise can be reduced. Also, by making the direction of inclination in the tire circumferential direction with respect to the tire width direction from the tire equatorial plane CL side toward the outer side in the tire width direction to be in the same direction for the shoulder lug grooves 60 located on both sides in the tire width direction of the tire equatorial plane CL, drainage properties of water flowing from the outer circumferential main groove 32 to the outer side in the tire width direction can be increased by the shoulder lug groove 60. As a result, noise performance and traction characteristics can be provided more reliably in a compatible manner.

Additionally, the shoulder lug groove 60, of any shoulder lug groove 60 located on both sides of the tire width direction, is inclined in the tire circumferential direction with respect to the tire width direction in a direction from the leading side toward the trailing side in the tire rotation direction, from the tire equatorial plane CL side toward the outer side in the tire width direction, and thus during traveling of the vehicle, sounds emitted from the shoulder lug grooves 60 can be emitted in the direction toward the front of the vehicle. In this way, the sound directed toward the side of the vehicle can be reduced, and sounds that are perceived as noise on the side of the vehicle can be reduced. As a result, the noise may be reduced more reliably.

Additionally, in the land portion 20, a plurality of main groove edge notch portions 70 that open to the circumferential main groove 30 are formed side by side in the tire circumferential direction, and thus, when the tread contact surface 3 contacts the ground, ground contact pressure at or near the portion of the land portion 20 defined by the circumferential main groove 30, that is, ground contact pressure at or near the edge portion of the circumferential main groove 30, can be prevented from being too high compared to the ground contact pressure of other portions of the land portion 20. In this way, localized increase in ground contact pressure can be suppressed when the tread contact surface 3 contacts the ground, and uneven wear due to an increase in local ground contact pressure can be suppressed. As a result, uneven wear resistance may be reliably improved.

In addition, an opening portion 55 of the lug groove 40 to the circumferential main groove 30 opens at a position opposing, among opposing groove walls 35 of the circumferential main groove 30, a groove wall 35 that is opposing a groove wall 35 on a side where the lug groove 40 opens, and thus the hitting sound when the tread contact surface 3 contacts the ground can be prevented from transmitted passing through the lug grooves 40 between adjacent land portions 20 via the circumferential main groove 30. In this way, the hitting sound when the tread contact surface 3 contacts the ground is transmitted to the edge of the tread portion 2 in the tire width direction and emitted toward the outer side in the tire width direction of the tread portion 2 becoming noise that can be suppressed. As a result, the noise may be reduced more reliably.

### Modified Examples

Note that, although the four circumferential main grooves 30 are provided in the above-described embodiment, the number of circumferential main grooves 30 may be other than four. The circumferential main grooves 30 extending in the tire circumferential direction may be five or six, and the number of circumferential main grooves 30 may be any number of four or more.

Additionally, in the embodiment described above, the lug grooves 40 are disposed in the center land portion 21 and the middle land portion 22, however, the lug groove 40 need not be disposed in both the center land portion 21 and the middle land portion 22. The lug groove 40 need only be disposed in at least one land portion 20 of the land portions 20 defined by the circumferential main grooves 30 on both sides in the tire width direction.

Additionally, although the lug groove 40 includes two bent portions 41 in the embodiment described above, the bent portions 41 may be other than two, and it is only required that two or more bent portions 41 of the lug groove 40 are provided. In the lug groove 40, by having two or more bent portions 41, the edge component can be increased, and the edge components can be acted on in a plurality of directions, and thus the edge effect can be increased. Accordingly, traction characteristics on wet road surfaces can be improved more reliably.

Additionally, although in the bent portion notch portion 42 disposed in the bent portion 41 of the lug groove 40, a contoured portion 43 has a curved shape with a substantially arc shape in the embodiment described above, the contoured portion 43 of the bent portion notch portion 42 may be other than the curved shape. The contoured portion 43 of the bent portion notch portion 42 may be formed in a shape, for example, in which a curved shape and a straight line are connected so that the corner portion of the trapezoidal shape is chamfered by an arc. By forming the bent portion notch portion 42 in a shape in which the contoured portion 43 has a curved shape or a curved shape and a straight line, stress concentration on the bent portion 41 when the land portion 20 is deformed can be suppressed by the bent portion notch portion 42. In this way, occurrence of cracking originating from the bent portion 41 can be suppressed and cracking resistance can be improved.

### Examples

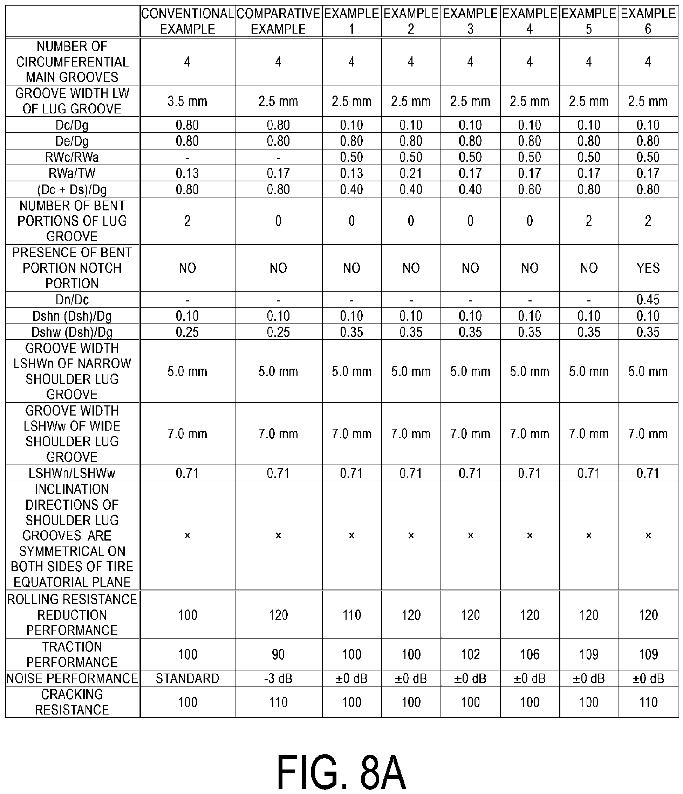

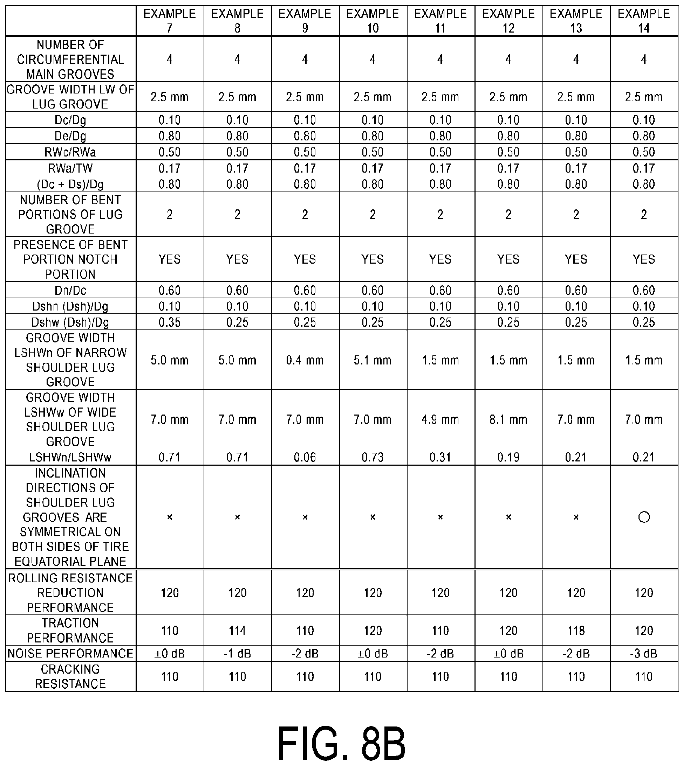

FIG. 8A and FIG. 8B are tables showing results of performance evaluation tests of pneumatic tires. In relation to the pneumatic tire 1 described above, description will be given of performance evaluation tests conducted on a pneumatic tire according to Conventional Example, the pneumatic tires 1 according to embodiments of the present invention, and pneumatic tires according to Comparative Examples to be compared with pneumatic tires 1 according to the embodiments of the present invention. In the performance evaluation tests, rolling resistance reduction performance, traction performance, noise performance, and cracking resistance were tested.

The performance evaluation test was performed on a test tire having a size of 315/70R22.5, the tire nominal specified by ETRTO. For rolling resistance reduction performance, the evaluation method for each of the test items was performed under test conditions in accordance with the ECE R117-02 (ECE Regulation No. 117 Revision 2). In the tests for rolling resistance reduction performance, the test tires were mounted on regular rims and inflated to the regular internal pressure, using an indoor drum testing machine, the rolling resistance at a speed of 80 km/h was measured at 31.26 kN, where the load was 85% of the regular load, and the reciprocal of the measured rolling resistance was expressed as an index with the Conventional Example described below as 100. In the rolling resistance reduction performance, larger index values indicate less rolling resistance and thus superior rolling resistance reduction performance.

Traction performance was tested under test conditions in accordance with the ECE R117-02. In the traction performance test, the test tire was mounted on a rim wheel of a regular rim of a rim size 22.5×9.00 and inflated to 630 kPa, which is an air pressure of 70% of the regular internal pressure, mounted on all wheels on a 4×2 tractor head that was a test vehicle, and had deceleration G when decelerated from a speed of 60 km/h to 20 km/h on a road surface with water depth of from 0.75 to 1.50 mm measured. In traction performance, the result is expressed as index values with the conventional example described below as 100. Larger values indicate more deceleration G generation and superior traction characteristics on wet road surfaces.

Additionally, the noise performance was evaluated by the loudness of the vehicle-external pass-by noise measured according to the tire noise test method established in the ECE R117-02. In this test, a test vehicle on which a test tire is mounted was driven from a distance sufficiently before the noise measurement section, and switched off the engine short of the section. Maximum noise values dB (noise values being within a frequency range of from 800 Hz to 1200 Hz) in the noise measurement section during the coasting traveling were measured at a plurality of speeds obtained by evenly dividing a speed range of +10 km/h with respect to a reference speed into eight or more sections. An average value of the maximum noise values was regarded as a vehicle-external pass-by noise. The maximum noise value dB was a sound pressure dB (A) measured by an A-weighting frequency correction circuit through use of a fixed microphone, which was installed in the middle of the noise measurement section at a road-side point of 7.5 m from a traveling center line and at a height of 1.2 m from a road surface. With regard to noise performance, the measurement results are indicated with increase-decrease values by taking a conventional example described below as a reference. A larger value indicates a smaller pass-by noise outside the vehicle, which means excellent performance with respect to reducing noise.

Additionally, regarding cracking resistance, a test vehicle to which the test tires were mounted was traveled for 40000 km, and after that, an occurrence status of cracking from the lug grooves 40 was measured by appearance. Cracking resistance is occurrence of cracking expressed as index values with the conventional example described below as 100. Larger values indicate less cracking and superior cracking resistance.

The performance evaluation tests were conducted on 16 kinds of pneumatic tires including a conventional pneumatic tire that is an example of a conventional pneumatic tire, Examples 1 to 14 that are of the pneumatic tire 1 according to the present invention, and a comparative example that is a pneumatic tire to be compared with the pneumatic tire 1 according to the present invention. Of these, in the pneumatic tire of the Conventional Example, the groove width LW of the lug groove 40 was not less than or equal to 3.0 mm, and the groove depth Dc of the lug groove central portion 51 with respect to the groove depth Dg of the circumferential main groove 30 was not less than or equal to 0.40. Additionally, in the pneumatic tire of the comparative example, the groove depth Dc of the lug groove central portion 51 with respect to the groove depth Dg of the circumferential main groove 30 was not less than or equal to 0.40.

In contrast, in all of Examples 1 to 14, which are examples of the pneumatic tires 1 according to embodiments of the present invention, the groove width LW of all of the lug grooves 40 was in the range 0.5 mm ≤ LW ≤ 3.0 mm, and the groove depth Dc of the lug groove central portion 51 and the groove depth Dg of the circumferential main groove 30 had a relationship in a range 0.05 ≤ (Dc/Dg) ≤ 0.40, the groove depth De of the lug groove edge portion 53 and the groove depth Dg of the circumferential main groove 30 had a relationship in a range 0.60 ≤ (De/Dg) ≤ 1.00, and the width RWc of the lug groove central portion 51 and the width RWa of the land portion 20 had a relationship in a range 0.30 ≤ (RWc/RWa) ≤ 0.7. Further, in each of the pneumatic tire 1 according to Examples 1 to 14, the ratio (RWa/TW) of the width RWa of the land portion 20 with respect to the tread development width TW, the ratio {(Dc + Ds)/Dg} of the combined depth of the groove depth Dc of the lug groove central portion 51 and the depth Ds of the sipe 58 with respect to the groove depth Dg of the circumferential main groove 30, the number of bent portions 41 of the lug groove 40, the presence of the bent portion notch portion 42, the ratio (Dn/Dc) of the depth Dn of the bent portion notch portion 42 with respect to the groove depth Dc of the lug groove central portion 51, the ratio (Dshn/Dg) of the groove depth Dshn of the narrow shoulder lug groove 61 and the ratio (Dshw/Dg) of the groove depth Dshw of the wide shoulder lug grooves 62 with respect to the groove depth Dg of the circumferential main groove 30, the groove width LSHWn of the narrow shoulder lug groove 61 and the groove width LSHWw of the wide shoulder lug groove 62, the ratio (LSHWn/LSHWw) of the groove width LSHWn of the narrow shoulder lug groove 61 with respect to the groove width LSHWw of the wide shoulder lug groove 62, and whether the direction of inclination of the shoulder lug grooves 60 located on both sides of the tire equatorial plane CL in the tire width direction is symmetrical on both sides of the tire equatorial plane CL were changed.

As a result of performing performance evaluation tests using these pneumatic tires 1, as illustrated in FIGS. 8A and 8B, the pneumatic tires 1 according to Examples 1 to 14 are found to be able to improve, without decreasing rolling resistance reduction performance and traction performance as compared with the conventional example, at least one of these performances. In other words, the pneumatic tires 1 according to Examples 1 to 14 can provide both reduction in rolling resistance and ensuring of traction characteristics in a compatible manner.

### Reference Signs List

1 Pneumatic tire
2 Tread portion
3 Tread contact surface
4 Shoulder portion
5 Sidewall portion
6 Carcass
7 Belt layer
8 Innerliner
10 Bead portion
20 Land portion
21 Center land portion
22 Middle land portion
23 Shoulder land portion
30 Circumferential main groove
31 Inner circumferential main groove
32 Outer circumferential main groove
35 Groove wall
40 Lug groove
41 Bent portion
42 Bent portion notch portion
43 Contoured portion
45 Width direction extending portion
46 Circumferential direction extending portion
51 Lug groove central portion
52 Groove bottom
53 Lug groove edge portion
55 Opening portion
58 Sipe
60 Shoulder lug groove
61 Narrow shoulder lug groove
62 Wide shoulder lug groove
65 Shoulder notch portion
70 Main groove edge notch portion

## Claims

1. A pneumatic tire (1), comprising:
four or more circumferential main grooves (30) extending in a tire circumferential direction; and
a plurality of land portions (20) defined by the circumferential main grooves (30),
the land portions (20) comprising a center land portion (21) located on an innermost side in a tire width direction, a shoulder land portion (23) located on an outermost side in the tire width direction, and a middle land portion (22) located between the center land portion and the shoulder land portion,
in at least one land portion (20) of the center land portion (21) and the middle land portion (22), a lug groove (40) being disposed extending in the tire width direction and opening to two of the circumferential main grooves (30) defining the land portion,
a groove width LW of the lug groove being in a range 0.5 mm ≤ LW ≤ 3.0 mm,
the lug groove (40) comprising a lug groove central portion (51) formed spaced apart from the circumferential main groove and having a predetermined length in an extension direction of the lug groove, and lug groove edge portions (53) located on both sides of the lug groove central portion (51) in the extension direction of the lug groove, and a groove depth Dc of the lug groove central portion (51), a groove depth De of the lug groove edge portion (53), and a groove depth Dg of the circumferential main groove (30) having a relationship in a range 0.05 ≤ (Dc/Dg) ≤ 0.40 and in a range 0.60 ≤ (De/Dg) ≤ 1.00, and
a width RWc of the lug groove central portion (51) in the tire width direction and a width RWa of the land portion (20) comprising the lug groove in the tire width direction having a relationship in a range 0.30 ≤ (RWc/RWa) ≤ 0.7.

2. The pneumatic tire (1) according to claim 1, wherein a width RWe of the lug groove edge portion (53) in the tire width direction and the width RWa of the land portion (20) comprising the lug groove in the tire width direction have a relationship in a range 0.10 ≤ (RWe/RWa) ≤ 0.30.

3. The pneumatic tire (1) according to claim 1 or 2, wherein the width RWa of the land portion (20) comprising the lug groove in the tire width direction with respect to a tread development width TW is in a range 0.14 ≤ (RWa/TW) ≤ 0.20.

4. The pneumatic tire (1) according to any one of claims 1 to 3, wherein
a sipe (58) is disposed at a groove bottom of the lug groove central portion (51) in the lug groove, and
in the lug groove (40), a groove depth Dc of the lug groove central portion (51), a depth Ds of the sipe (58) from the groove bottom of the lug groove central portion (51), and a groove depth Dg of the circumferential main groove (30) have a relationship in a range 0.45 ≤ {(Dc + Ds)/Dg} ≤ 1.00.

5. The pneumatic tire (1) according to any one of claims 1 to 4, wherein the lug groove (40) comprises two or more bent portions (41).

6. The pneumatic tire according to claim 5, wherein
the bent portion (41) is located in the lug groove central portion (51),
a bent portion notch portion (42) is disposed on a reflex angle side of the bent portion (41) in the lug groove (40), and
in the bent portion notch portion (42), a depth Dn of the bent portion notch portion and a groove depth Dc of the lug groove central portion (51) have a relationship in a range 0.50 ≤ (Dn/Dc) ≤ 1.00.

7. The pneumatic tire (1) according to claim 6, wherein the bent portion notch portion (42) comprises a contoured portion (43) formed with a curved shape or a shape in which a curved shape and a straight line are connected.

8. The pneumatic tire (1) according to any one of claims 1 to 7, wherein
a shoulder lug groove (60) extending in the tire width direction is disposed in the shoulder land portion (23) and
in the shoulder lug groove (60), a groove depth Dsh of the shoulder lug groove and a groove depth Dg of the circumferential main groove (30) have a relationship in a range 0.05 ≤ (Dash/Dg) ≤ 0.30.

9. The pneumatic tire (1) according to claim 8, wherein
the shoulder lug groove (60) comprises a narrow shoulder lug groove (61) and a wide shoulder lug groove (62), and the narrow shoulder lug groove and the wide shoulder lug groove are alternately disposed in the tire circumferential direction,
a groove width LSHWn of the narrow shoulder lug groove (61) is in a range 0.5 mm ≤ LSHWn ≤ 5.0 mm,
a groove width LSHWw of the wide shoulder lug groove (62) is in a range 5.0 mm ≤ LSHWw ≤ 8.0 mm, and
the groove width LSHWn of the narrow shoulder lug groove (61) and the groove width LSHWw of the wide shoulder lug groove (62) have a relationship in a range 0.15 ≤ (LSHWn/LSHWw) ≤ 0.70.

10. The pneumatic tire (1) according to claim 9, wherein
in the shoulder land portion (23), a shoulder notch portion (65) is disposed opening to the circumferential main groove (30) defining the shoulder land portion, a plurality of the shoulder notch portions (65) being arranged in the tire circumferential direction and
the shoulder lug groove (60) opens to the shoulder notch portion (65) and the narrow shoulder lug groove (61) opens to the shoulder notch portion (65) at a position on one end side of the shoulder notch portion in the tire circumferential direction.

11. The pneumatic tire (1) according to any one of claims 8 to 10, wherein
the shoulder lug groove (60) is inclined in the tire circumferential direction with respect to the tire width direction and
in the shoulder lug groove (60) located on one side of the tire equatorial plane in the tire width direction, a direction of inclination in the tire circumferential direction with respect to the tire width direction from the tire equatorial plane side in the tire width direction toward an outer side in the tire width direction is in an identical direction with the shoulder lug groove (60) located on an other side of the tire equatorial plane in the tire width direction.

12. The pneumatic tire (1) according to any one of claims 1 to 11, wherein in the land portion (20), a main groove edge notch portion (70) is disposed opening to the circumferential main groove, a plurality of the main groove edge notch portions (70) being arranged in the tire circumferential direction.

13. The pneumatic tire (1) according to any one of claims 1 to 12, wherein an opening portion (55) of the lug groove (40) to the circumferential main groove (30) opens at a position opposite to, among opposing groove walls (35) of the circumferential main groove (30), a groove wall (35) that is opposite to a groove wall (35) on a side where the lug groove opens.

## Patentansprüche

1. Luftreifen (1), umfassend:
vier oder mehr Hauptumfangsrillen (30), die sich in einer Reifenumfangsrichtung erstrecken; und
eine Mehrzahl von Stegabschnitten (20), die durch die Hauptumfangsrillen (30) definiert wird,
die Stegabschnitte (20) umfassend einen Zentralstegabschnitt (21), der sich auf einer innersten Seite in Reifenbreitenrichtung befindet, einen Schulterstegabschnitt (23), der sich auf einer äußersten Seite in Reifenbreitenrichtung befindet, und einen mittleren Stegabschnitt (22), der sich zwischen dem Zentralstegabschnitt und dem Schulterstegabschnitt befindet,
wobei in mindestens einem Stegabschnitt (20) des Zentralstegabschnitts (21) und des mittleren Stegabschnitts (22) eine Stollenrille (40) angeordnet ist, die sich in der Reifenbreitenrichtung erstreckt und zu zwei der Hauptumfangsrillen (30), die den Stegabschnitt definieren, öffnet,
wobei eine Rillenbreite LW der Stollenrille in einem Bereich von 0,5 mm ≤ LW ≤ 3,0 mm liegt,
die Stollenrille (40) umfassend einen zentralen Abschnitt (51) der Stollenrille, der von der Hauptumfangsrille beabstandet ausgebildet ist und eine vorher festgelegte Länge in einer Erstreckungsrichtung der Stollenrille aufweist, und Randabschnitte (53) der Stollenrille, die sich auf beiden Seiten des zentralen Abschnitts (51) der Stollenrille in der Erstreckungsrichtung der Stollenrille befinden, und eine Rillentiefe Dc des zentralen Abschnitts (51) der Stollenrille, wobei eine Rillentiefe De des Randabschnitts (53) der Stollenrille und eine Rillentiefe Dg der Hauptumfangsrille (30) ein Verhältnis in einem Bereich 0,05 ≤ (Dc/Dg) ≤ 0,40 und in einem Bereich 0,60 ≤ (De/Dg) ≤ 1,00 aufweisen und
eine Breite RWc des zentralen Abschnitts (51) der Stollenrille in der Reifenbreitenrichtung und eine Breite RWa des Stegabschnitts (20), umfassend die Stollenrille in der Reifenbreitenrichtung, ein Verhältnis in einem Bereich 0,30 ≤ (RWc/RWa) ≤ 0,7 aufweisen.

2. Luftreifen (1) gemäß Anspruch 1, wobei eine Breite RWe des Randabschnitts (53) der Stollenrille in der Reifenbreitenrichtung und die Breite RWa des Stegabschnitts (20), umfassend die Stollenrille in der Reifenbreitenrichtung, ein Verhältnis in einem Bereich 0,10 ≤ (RWe/RWa) ≤ 0,30 aufweisen.

3. Luftreifen (1) gemäß Anspruch 1 oder 2, wobei die Breite RWa des Stegabschnitts (20), umfassend die Stollenrille in der Reifenbreitenrichtung, hinsichtlich einer Laufflächenentwicklungsbreite TW in einem Bereich 0,14 ≤ (RWa/TW) ≤ 0,20 liegt.

4. Luftreifen (1) gemäß einem der Ansprüche 1 bis 3, wobei
eine Lamelle (58) an einem Rillenboden des zentralen Abschnitts (51) der Stollenrille in der Stollenrille angeordnet ist und
in der Stollenrille (40) eine Rillentiefe Dc des zentralen Abschnitts (51) der Stollenrille, eine Tiefe Ds der Lamelle (58) von dem Rillenboden des zentralen Abschnitts (51) der Stollenrille und eine Rillentiefe Dg der Hauptumfangsrille (30) ein Verhältnis in einem Bereich 0,45 ≤ {(Dc + Ds)/Dg} ≤ 1,00 aufweisen.

5. Luftreifen (1) gemäß einem der Ansprüche 1 bis 4, wobei die Stollenrille (40) zwei oder mehr gebogene Abschnitte (41) umfasst.

6. Luftreifen gemäß Anspruch 5, wobei
sich der gebogene Abschnitt (41) in dem zentralen Abschnitt (51) der Stollenrille befindet,
ein Aussparungsabschnitt (42) des gebogenen Abschnitts an einer Reflexwinkelseite des gebogenen Abschnitts (41) in der Stollenrille (40) angeordnet ist und
in dem Aussparungsabschnitt (42) des gebogenen Abschnitts eine Tiefe Dn des Aussparungsabschnitt des gebogenen Abschnitts und eine Rillentiefe Dc des zentralen Abschnitts (51) der Stollenrille ein Verhältnis in einem Bereich 0,50 ≤ (Dn/Dc) ≤ 1,00 aufweisen.

7. Luftreifen (1) gemäß Anspruch 6, wobei der Aussparungsabschnitt (42) des gebogenen Abschnitts einen konturierten Abschnitt (43) umfasst, der mit einer gekrümmten Form oder einer Form, in der eine gekrümmte Form und eine gerade Linie verbunden sind, ausgebildet ist.

8. Luftreifen (1) gemäß einem der Ansprüche 1 bis 7, wobei
eine Schulterstollenrille (60), die sich in der Reifenbreitenrichtung erstreckt, in dem Schulterstegabschnitt (23) angeordnet ist und
in der Schulterstollenrille (60) eine Rillentiefe Dsh der Schulterstollenrille und eine Rillentiefe Dg der Hauptumfangsrille (30) ein Verhältnis in einem Bereich 0,05 ≤ (Dash/Dg) ≤ 0,30 aufweisen.

9. Luftreifen (1) gemäß Anspruch 8, wobei
die Schulterstollenrille (60) eine schmale Schulterstollenrille (61) und eine breite Schulterstollenrille (62) umfasst und die schmale Schulterstollenrille und die breite Schulterstollenrille in der Reifenumfangsrichtung abwechselnd angeordnet sind,
eine Rillenbreite LSHWn der schmalen Schulterstollenrille (61) in einem Bereich 0,5 mm ≤ LSHWn ≤ 5,0 mm liegt,
eine Rillenbreite LSHWw der breiten Schulterstollenrille (62) in einem Bereich 5,0 mm ≤ LSHWw ≤ 8,0 mm liegt und
die Rillenbreite LSHWn der schmalen Schulterstollenrille (61) und die Rillenbreite LSHWw der breiten Schulterstollenrille (62) ein Verhältnis in einem Bereich 0,15 ≤ (LSHWn/LSHWw) ≤ 0,70 aufweisen.

10. Luftreifen (1) gemäß Anspruch 9, wobei
in dem Schulterstegabschnitt (23) ein Schulteraussparungsabschnitt (65) angeordnet ist, der sich zu der Hauptumfangsrille (30), die den Schulterstegabschnitt definiert, öffnet, wobei eine Mehrzahl der Schulteraussparungsabschnitte (65) in der Reifenumfangsrichtung eingerichtet ist und sich die Schulterstollenrille (60) zu dem Schulteraussparungsabschnitt (65) öffnet und die schmale Schulterstollenrille (61) zu dem Schulteraussparungsabschnitt (65) an einer Position auf einer Endseite des Schulteraussparungsabschnitts in der Reifenumfangsrichtung öffnet.

11. Luftreifen (1) gemäß einem der Ansprüche 8 bis 10, wobei
die Schulterstollenrille (60) in der Reifenumfangsrichtung hinsichtlich der Reifenbreitenrichtung geneigt ist und
in der Schulterstollenrille (60), die sich auf einer Seite der Äquatorialebene des Reifens in der Reifenbreitenrichtung befindet, eine Neigungsrichtung in der Reifenumfangsrichtung hinsichtlich der Reifenbreitenrichtung von der Äquatorialebene des Reifens in der Reifenbreitenrichtung zu einer Außenseite in der Reifenbreitenrichtung hin in einer identischen Richtung mit der Schulterstollenrille (60), die sich auf einer anderen Seite der Äquatorialebene des Reifens in der Reifenbreitenrichtung befindet, ist.

12. Luftreifen (1) gemäß einem der Ansprüche 1 bis 11, wobei in dem Stegabschnitt (20) ein Hauptrillenrandaussparungsabschnitt (70), der sich zu der Hauptumfangsrille öffnet, angeordnet ist, wobei eine Mehrzahl von Hauptrillenrandaussparungsabschnitten (70) in der Reifenumfangsrichtung eingerichtet ist.

13. Luftreifen (1) gemäß einem der Ansprüche 1 bis 12, wobei sich ein Öffnungsabschnitt (55) der Stollenrille (40) zu der Hauptumfangsrille (30) an einer Position gegenüberliegend zu, unter gegenüberliegenden Rillenwänden (35) der Hauptumfangsrille (30), einer Rillenwand (35), die einer Rillenwand (35) gegenüberliegend ist, auf einer Seite öffnet, wo sich die Stollenrille öffnet.

## Revendications

1. Pneumatique (1), comprenant :
quatre rainures principales circonférentielles ou plus (30) s'étendant dans une direction circonférentielle de pneu ; et
une pluralité de parties de méplat (20) définies par les rainures principales circonférentielles (30),
les parties de méplat (20) comprenant une partie de méplat centrale (21) située sur un côté le plus interne dans une direction de largeur de pneu, une partie de méplat d'épaulement (23) située sur un côté le plus externe dans la direction de largeur de pneu, et une partie de méplat médiane (22) située entre la partie de méplat centrale et la partie de méplat d'épaulement,
dans au moins une partie de méplat (20) de la partie de méplat centrale (21) et la partie de méplat médiane (22), une rainure de barrette (40) étant disposée s'étendant dans la direction de largeur de pneu et s'ouvrant sur deux des rainures principales circonférentielles (30) définissant la partie de méplat,
une largeur de rainure LW de la rainure de barrette étant dans une plage de 0,5 mm ≤ LW ≤ 3,0 mm,
la rainure de barrette (40) comprenant une partie centrale de rainure de barrette (51) formée espacée de la rainure principale circonférentielle et ayant une longueur prédéterminée dans une direction d'extension de la rainure de barrette, et des parties de bord de rainure de barrette (53) situées sur les deux côtés de la partie centrale de rainure de barrette (51) dans la direction d'extension de la rainure de barrette, et une profondeur de rainure De de la partie centrale de rainure de barrette (51), une profondeur de rainure De de la partie de bord de rainure de barrette (53), et une profondeur de rainure Dg de la rainure principale circonférentielle (30) ayant une relation dans une plage de 0,05 ≤ (Dc/Dg) ≤ 0,40 et dans une plage de 0,60 ≤ (De/Dg) ≤ 1,00, et
une largeur RWc de la partie centrale de rainure de barrette (51) dans la direction de largeur de pneu et une largeur RWa de la partie de méplat (20) comprenant la rainure de barrette dans la direction de largeur de pneu ayant une relation dans une plage de 0,30 ≤ (RWc/RWa) ≤ 0,7.

2. Pneumatique (1) selon la revendication 1, dans lequel une largeur RWe de la partie de bord de rainure de barrette (53) dans la direction de largeur de pneu et la largeur RWa de la partie de méplat (20) comprenant la rainure de barrette dans la direction de largeur de pneu ont une relation dans une plage de 0,10 ≤ (RWe/RWa) ≤ 0,30.

3. Pneumatique (1) selon la revendication 1 ou 2, dans lequel la largeur RWa de la partie de méplat (20) comprenant la rainure de barrette dans la direction de largeur de pneu par rapport à une largeur de développement de bande de roulement TW est dans une plage de 0,14 ≤ (RWa/TW) ≤0,20.

4. Pneumatique (1) selon l'une quelconque des revendications 1 à 3, dans lequel
une lamelle (58) est disposée au niveau d'un fond de rainure de la partie centrale de rainure de barrette (51) dans la rainure de barrette, et
dans la rainure de barrette (40), une profondeur de rainure De de la partie centrale de rainure de barrette (51), une profondeur Ds de la lamelle (58) à partir du fond de rainure de la partie centrale de rainure de barrette (51), et une profondeur de rainure Dg de la rainure principale circonférentielle (30) ont une relation dans une plage de 0,45 ≤ {(Dc + Ds)/Dg} ≤ 1,00.

5. Pneumatique (1) selon l'une quelconque des revendications 1 à 4, dans lequel la rainure de barrette (40) comprend deux parties coudées ou plus (41).

6. Pneumatique selon la revendication 5, dans lequel
la partie coudée (41) est située dans la partie centrale de rainure de barrette (51),
une partie d'encoche de partie coudée (42) est disposée sur un côté d'angle réflexe de la partie coudée (41) dans la rainure de barrette (40), et
dans la partie d'encoche de partie coudée (42), une profondeur Dn de la partie d'encoche de partie coudée et une profondeur de rainure De de la partie centrale de rainure de barrette (51) ont une relation dans une plage de 0,50 ≤ (Dn/Dc) ≤ 1,00.

7. Pneumatique (1) selon la revendication 6, dans lequel la partie d'encoche de partie coudée (42) comprend une partie profilée (43) formée avec une forme incurvée ou une forme dans laquelle une forme incurvée et une ligne droite sont reliées.

8. Pneumatique (1) selon l'une quelconque des revendications 1 à 7, dans lequel
une rainure de barrette d'épaulement (60) s'étendant dans la direction de largeur de pneu est disposée dans la partie de méplat d'épaulement (23) et
dans la rainure de barrette d'épaulement (60), une profondeur de rainure Dsh de la rainure de barrette d'épaulement et une profondeur de rainure Dg de la rainure principale circonférentielle (30) ont une relation dans une plage de 0,05 ≤ (Dash/Dg) ≤ 0,30.

9. Pneumatique (1) selon la revendication 8, dans lequel
la rainure de barrette d'épaulement (60) comprend une rainure de barrette d'épaulement étroite (61) et une rainure de barrette d'épaulement large (62), et la rainure de barrette d'épaulement étroite et la rainure de barrette d'épaulement large sont disposées en alternance dans la direction circonférentielle de pneu,
une largeur de rainure LSHWn de la rainure de barrette d'épaulement étroite (61) est dans une plage de 0,5 mm ≤ LSHWn ≤ 5,0 mm,
une largeur de rainure LSHWw de la rainure de barrette d'épaulement large (62) est dans une plage de 5,0 mm ≤ LSHWw ≤ 8,0 mm, et
la largeur de rainure LSHWn de la rainure de barrette d'épaulement étroite (61) et la largeur de rainure LSHWw de la rainure de barrette d'épaulement large (62) ont une relation dans une plage 0,15 ≤ (LSHWn/LSHWw) ≤ 0,70.

10. Pneumatique (1) selon la revendication 9, dans lequel
dans la partie de méplat d'épaulement (23), une partie d'encoche d'épaulement (65) est disposée s'ouvrant sur la rainure principale circonférentielle (30) définissant la partie de méplat d'épaulement, une pluralité des parties d'encoche d'épaulement (65) étant agencées dans la direction circonférentielle de pneu et la rainure de barrette d'épaulement (60) s'ouvre sur la partie d'encoche d'épaulement (65) et la rainure de barrette d'épaulement étroite (61) s'ouvre sur la partie d'encoche d'épaulement (65) au niveau d'une position sur un côté d'extrémité de la partie d'encoche d'épaulement dans la direction circonférentielle de pneu.

11. Pneumatique (1) selon l'une quelconque des revendications 8 à 10, dans lequel
la rainure de barrette d'épaulement (60) est inclinée dans la direction circonférentielle de pneu par rapport à la direction de largeur de pneu et
dans la rainure de barrette d'épaulement (60) située sur un côté du plan équatorial de pneu dans la direction de largeur de pneu, une direction d'inclinaison dans la direction circonférentielle de pneu par rapport à la direction de largeur de pneu depuis le côté de plan équatorial de pneu dans la direction de largeur de pneu vers un côté externe dans la direction de largeur de pneu est dans une direction identique à la rainure de barrette d'épaulement (60) située sur un autre côté du plan équatorial de pneu dans la direction de largeur de pneu.

12. Pneumatique (1) selon l'une quelconque des revendications 1 à 11, dans lequel dans la partie de méplat (20), une partie d'encoche de bord de rainure principale (70) est disposée s'ouvrant sur la rainure principale circonférentielle, une pluralité des parties d'encoche de bord de rainure principale (70) étant agencées dans la direction circonférentielle de pneu.

13. Pneumatique (1) selon l'une quelconque des revendications 1 à 12, dans lequel une partie d'ouverture (55) de la rainure de barrette (40) sur la rainure principale circonférentielle (30) s'ouvre au niveau d'une position opposée à, parmi des parois de rainure opposées (35) de la rainure principale circonférentielle (30), une paroi de rainure (35) qui est opposée à une paroi de rainure (35) sur un côté où la rainure de barrette s'ouvre.
